# FASCICULE DE BREVET EUROPEEN

(11) **EP 3 891 374 B1**
(45) Date de publication et mention de la délivrance du brevet: **13.03.2024**
(21) Numéro de dépôt: 19839352.2
(22) Date de dépôt: 03.12.2019
(51) Int. Cl.: F02K 1/72, F02K 1/80, F02K 1/82

(54) **INVERSEUR DE POUSSÉE MUNI D'UN VOLET D'INVERSION DE POUSSÉE ALLÉGÉ**
SCHUBUMKEHRVORRICHTUNG MIT EINER LEICHTEN SCHUBUMKEHRKLAPPE
THRUST REVERSER PROVIDED WITH A LIGHTWEIGHT THRUST REVERSER FLAP

(30) Priorité: 07.12.2018 FR 1872546
(43) Date de publication de la demande: 13.10.2021
(73) Titulaire: Safran Nacelles, 76700 Gonfreville l'Orcher (FR)
(72) Inventeur: BILLAULT, Romain, 76700 GONFREVILLE L'ORCHER (FR)
(74) Mandataire: Germain Maureau
(86) Numéro de dépôt international: PCT/FR2019/052905
(87) Numéro de publication internationale: WO 2020/115424

(56) Documents cités:
- EP-A1- 3 361 082
- FR-A1- 3 039 517
- US-A- 4 564 160
- US-A- 5 927 647
- US-A1- 2016 326 985

## Description

L'invention concerne un inverseur de poussée d'une nacelle pour turboréacteur comprenant un volet d'inversion de poussée allégé.

Un aéronef est mû par plusieurs turboréacteurs logés chacun dans une nacelle abritant un ensemble de dispositifs d'actionnement annexes liés à son fonctionnement et assurant diverses fonctions lorsque le turboréacteur est en fonctionnement ou à l'arrêt.

Ces dispositifs d'actionnement annexes comprennent notamment un système mécanique d'inversion de poussée.

Une nacelle de turboréacteur présente généralement une structure sensiblement tubulaire comprenant une entrée d'air en amont du turboréacteur, une section médiane destinée à entourer une soufflante dudit turboréacteur, une section aval destinée à entourer la chambre de combustion du turboréacteur et intégrant éventuellement des moyens d'inversion de poussée, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (flux primaire) et un flux d'air froid (flux secondaire) qui circule à l'extérieur du turboréacteur à travers un passage annulaire, également appelé veine de circulation d'air, formé entre un carénage du turboréacteur et une paroi interne de la nacelle. Les deux flux d'air sont éjectés du turboréacteur par l'arrière de la nacelle via cette veine de circulation d'air.

Le rôle d'un inverseur de poussée est, lors de l'atterrissage d'un aéronef, d'améliorer la capacité de freinage de celui-ci en redirigeant vers l'avant au moins une partie de l'air éjecté du turboréacteur. Dans cette phase, l'inverseur obstrue au moins une partie de la veine de circulation d'air et dirige ce flux vers l'avant de la nacelle, générant de ce fait une contre-poussée qui vient s'ajouter au freinage des roues et aérofreins de l'avion.

De manière générale, la structure d'un inverseur comprend un capot d'inverseur déplaçable entre, d'une part, une position de jet inversé dans laquelle il ouvre dans la nacelle un passage destiné au flux d'air dévié, et d'autre part, une position de jet direct dans laquelle il ferme ce passage. Dans le cas d'un inverseur à grilles de déviation, la réorientation du flux d'air en position de jet inversé est effectuée par des grilles de déviation, associées à des volets d'inversion venant bloquer au moins partiellement la veine de circulation d'air, le capot n'ayant qu'une simple fonction de coulissage visant à découvrir ou recouvrir ces grilles de déviation.

Les volets d'inversion, également appelés volets de blocage, quant à eux, sont activés et entraînés par le coulissement du capot mobile jusqu'à venir obstruer au moins partiellement la veine en aval des grilles, de manière à optimiser la réorientation du flux d'air froid.

De façon connue, outre la fonction d'obturation de la veine de circulation d'air, ces volets d'inversion réalisent une fonction acoustique. De tels volets sont connus du document FR 3 039 517 A1.

Pour réaliser ces fonctions acoustique et d'obturation, ces volets d'inversion sont conçus par l'assemblage de deux parois espacées l'une de l'autre de sorte à former un caisson de résonnance acoustique entre une première paroi percée et une deuxième paroi pleine.

Dans le sens de l'écoulement du flux d'air traversant une nacelle telle que décrite précédemment, ce flux d'air vient en contact de la première paroi du volet d'inversion. Cette première paroi percée sur sa surface autorise le passage d'une faible partie de ce flux d'air et dévie l'autre partie de ce flux d'air en direction des grilles prévues à cet effet. La partie du flux d'air traversant la première paroi percée se retrouve prise dans le caisson de résonance formé entre la première paroi et la deuxième paroi pleine.

Un but de l'invention est de proposer un inverseur de poussée comprenant un volet d'inversion amélioré permettant d'alléger la charge en vol de cet inverseur de poussée tout en préservant la fonction acoustique et la fonction d'obturation d'un tel volet.

A cet effet, l'invention a pour objet un inverseur de poussée d'une nacelle de turboréacteur pour aéronef, ledit inverseur de poussée comportant une structure fixe et une structure mobile délimitant ensemble une veine de circulation d'air, au moins un volet d'inversion de poussée comprenant une unique paroi, cette paroi étant percée sur sa surface pour permettre le passage par le volet d'une partie d'un flux d'air dévié par le volet, ladite paroi comprenant une structure raidissant le volet et ayant une fonction acoustique, le volet étant articulé entre la structure fixe et la structure mobile pour permettre :
- dans une position de jet direct, de disposer ladite paroi du volet le long d'une section acoustique de la structure mobile de sorte à permettre la circulation d'un flux d'air à travers la veine de circulation d'air, ladite section acoustique formant avec la structure de ladite paroi un résonateur acoustique et,
- dans une position de jet inversé, de disposer ladite paroi du volet pour dévier un flux d'air traversant la veine de circulation d'air et permettre le passage, par la paroi du volet et à travers la veine de circulation d'air, d'une partie du flux d'air dévié par le volet.

Contrairement à l'art antérieur, le volet ne comprend pas de deuxième paroi pleine intégrée au volet. L'invention permet alors avantageusement d'utiliser la structure mobile existante pour former une deuxième paroi du volet d'inversion de poussée lorsque l'inverseur de poussée est en position de jet direct. En effet, dans cette position de jet direct de l'inverseur de poussée, la paroi du volet est maintenue pour s'étendre le long de la structure mobile en regard de celle-ci. Plus particulièrement, la structure de la paroi du volet est maintenue pour s'étendre le long de la structure mobile en regard de la section acoustique de la structure mobile.

On comprendra que la section acoustique de la structure mobile doit être pleine de sorte à former une paroi pleine équivalente à celle de l'art antérieur.

On entend par le terme « section pleine », une surface empêchant le passage d'un flux d'air.

Un volet tel que défini par l'invention permet d'alléger son poids et par conséquent également le poids de l'inverseur de poussée le portant.

En position de jet direct, le volet selon l'invention permet d'atténuer les risques de recirculation d'air entre la paroi du volet et la section acoustique de la structure mobile.

Cette limitation des risques de recirculation d'air permet de limiter le dimensionnement d'une bielle articulant le volet entre la structure fixe et la structure mobile.

En position de jet inversé, la paroi percée du volet permet un différentiel de pression plus faible sur le volet.

De façon non limitative, ladite paroi peut être réalisée en aluminium ou en matière thermoplastique, ou encore en fibres composites.

Selon un mode de réalisation de l'invention, la structure de la paroi du volet est formée d'une pluralité d'unités acoustiques.

Avantageusement, la structure de la paroi du volet est dimensionnée pour, en position de jet direct, maintenir entre cette dernière et ladite section acoustique de la structure mobile un jeu prédéterminé, préférentiellement inférieur à 3 millimètres.

Le maintien d'un tel jeu prédéterminé permet de réaliser la fonction acoustique du résonateur acoustique formé par le volet d'inversion de poussée et la section acoustique de la structure mobile, ceci en position de jet direct.

Selon un mode de réalisation de l'invention, l'inverseur de poussée est équipé d'un ressort maintenant ledit jeu prédéterminé entre la structure du volet et ladite section acoustique de la structure mobile.

Avantageusement, une partie de la structure du volet est prévue pour recevoir le ressort.

On comprendra que le ressort est dimensionné pour assurer le maintien de ce jeu prédéterminé.

Avantageusement, la paroi du volet présente une ouverture prévue pour le passage d'un mécanisme de déploiement du volet, préférentiellement une bielle, en vue de son accrochage au ressort.

Selon un mode de réalisation de l'invention, un bord de ladite paroi du volet en regard de la structure fixe, en position de jet inversé, comprend un joint à lèvre.

Avantageusement, le joint à lèvre est surmoulé sur le bord de ladite paroi.

Un tel surmoulage du joint à lèvre est facilité par le volet selon l'invention comprenant une unique paroi.

L'invention concerne par ailleurs une nacelle équipée d'un inverseur de poussée tel que décrit dans le présent document.

D'autres aspects, buts et avantages de l'invention apparaîtront à la lecture de la description détaillée suivante de formes de réalisation préférées de celle-ci, donnée à titre d'exemple non limitatif et faite en référence aux dessins annexés sur lesquels :
[Fig 1] illustre une vue schématique en coupe d'un inverseur de poussée en position de jet direct,
[Fig 2] illustre une vue schématique en coupe d'un inverseur de poussée en position de jet inversée,
[Fig 3] illustre une vue schématique en coupe d'un inverseur de poussée en position de jet direct équipé d'un volet selon l'invention,
[Fig 4] illustre une vue schématique agrandie d'une section de la figure 3 pour représenter un jeu prédéterminé entre le volet et l'inverseur de poussée,
[Fig 5] illustre une vue schématique en coupe agrandie d'une section de la figure 4 pour représenter un joint à lèvre disposé en bord d'une paroi du volet selon l'invention,
[Fig 6] illustre une vue en perspective de l'arrière d'un volet selon l'invention,
[Fig 7] illustre une vue en perspective de l'avant du volet représenté à la figure 7.

Dans le présent document, les terme « amont » et « aval » s'entendent en référence au sens de circulation du flux d'air traversant la veine de circulation d'air de l'inverseur de poussée.

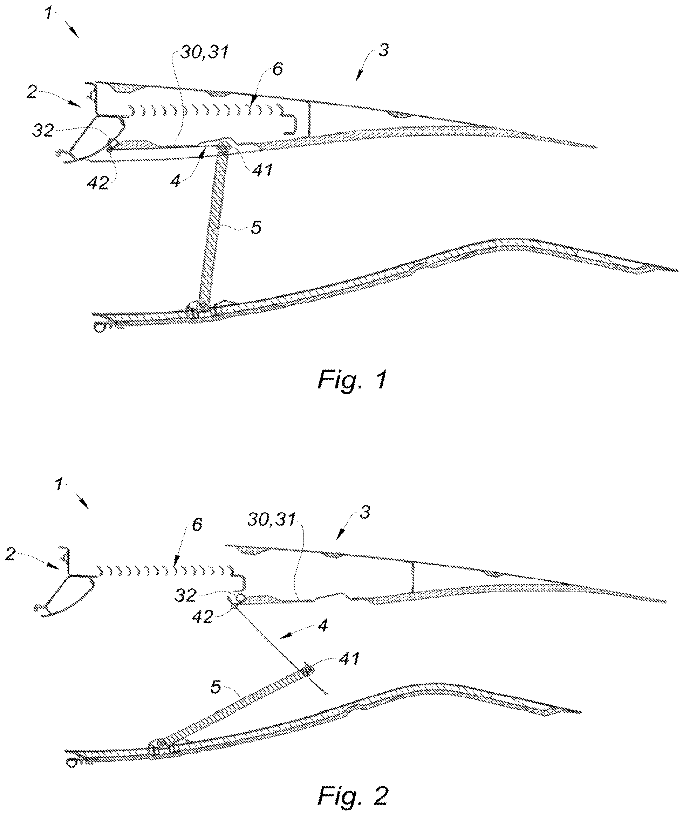

Aux figures 1 et 2, on a représenté un inverseur de poussée 1 d'une nacelle de turboréacteur pour aéronef, respectivement en position de jet direct et de jet inversé.

Tel que représenté, l'inverseur de poussée 1 comporte une structure fixe 2 et une structure mobile 3 délimitant ensemble une veine de circulation d'air.

On a représenté un volet 4 d'inversion de poussée articulé par un mécanisme de déploiement du volet 4, ici formé par une bielle 5, pour permettre son déploiement lors du déplacement en translation de la structure mobile 3 par rapport à la structure fixe 2.

Tel que représenté, une extrémité de la bielle 5 est solidaire de la structure fixe 2 alors que l'autre extrémité est solidaire d'un point d'accrochage 41 du volet 4.

Par ailleurs, le volet est monté sur la structure mobile 3 par l'intermédiaire d'une liaison pivot. La liaison pivot est assurée par deux points pivot 42 du volet 4.

Lors du passage de la position de jet direct vers la position de jet inversé, le déplacement en translation de la structure mobile 3 par rapport à la structure fixe 2 permet l'entraînement par la bielle 5 du volet 4 via son point d'accrochage 41. Le volet 4 est alors entraîné en rotation par rapport à la structure mobile 3 via ses deux points pivot 42.

Lors de son déploiement, le volet 4 d'inversion de poussée vient s'étendre dans la veine de circulation d'air pour dévier le flux d'air la traversant.

Le flux d'air traversant la veine de circulation d'air est alors dévié vers les grilles 6 de l'inverseur de poussée 1 de sorte à permettre une contre-poussée permettant l'inversion de poussée.

Lors du passage de la position de jet inversé vers la position de jet direct, le déplacement en translation de la structure mobile 3 par rapport à la structure fixe 2 trouve une position de fin de course lorsqu'un joint torique 32 porté par la structure mobile 3, plus particulièrement par l'extrémité amont d'un carter interne 30 de la structure mobile 3, vient s'écraser contre la structure fixe 2 de l'inverseur de poussée 1.

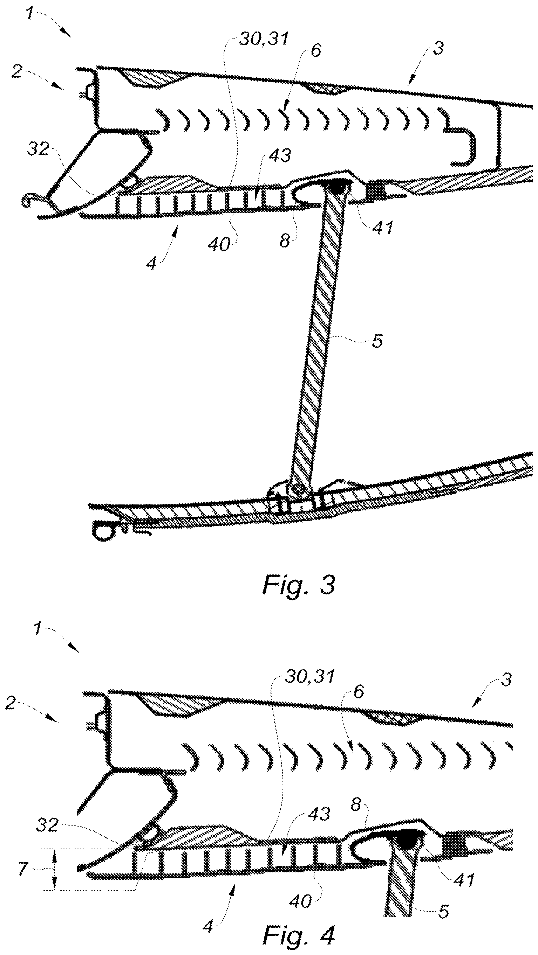

A la figure 3, on a représenté plus en détail le volet 4 selon l'invention. La figure 3 illustre à nouveau le volet 4 de l'inverseur de poussée 1 dans une position de jet direct.

Tel que représenté aux figures 3 à 7, le volet 4 d'inversion de poussée comprenant une unique paroi 40.

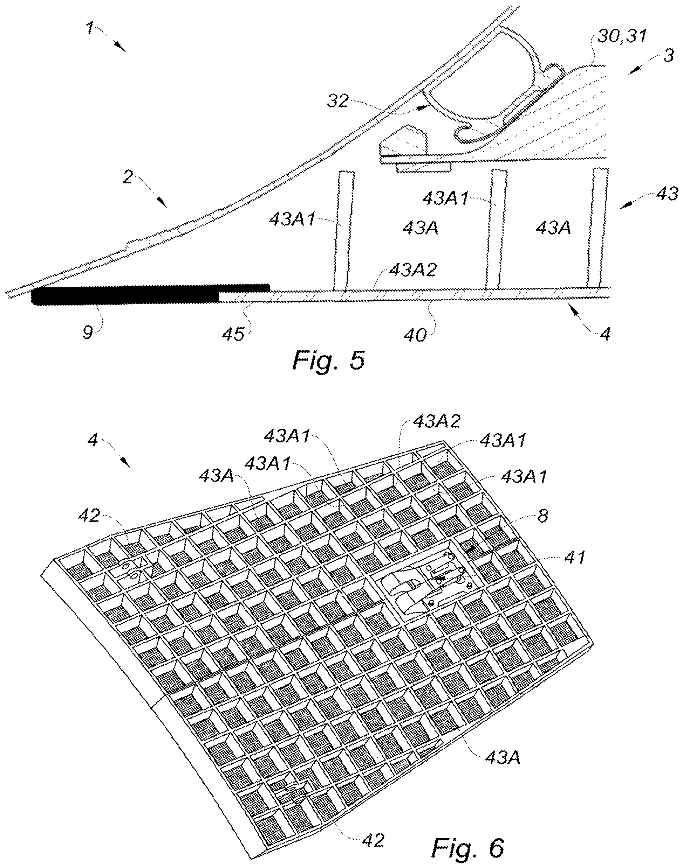

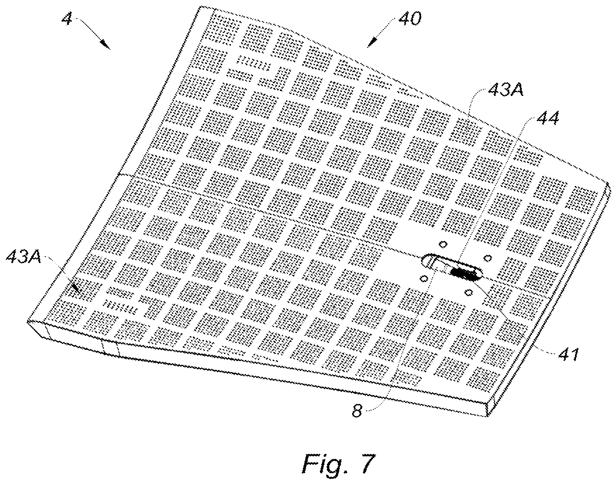

En référence plus particulièrement aux figures 6 et 7, cette paroi 40 est percée sur sa surface pour permettre le passage par le volet d'une partie d'un flux d'air dévié par le volet 4.

Par ailleurs, en référence aux figures 3 à 7 à nouveau, ladite paroi 40 comprend une structure 43 raidissant le volet 4 et permettant une fonction acoustique du volet 4.

La structure 43 raidissant le volet 4 est ici formée par un ensemble d'unités acoustiques 43A. Plus particulièrement, la structure 43 du volet 4 est formée par une grille s'étendant avantageusement depuis la paroi 40 du volet 4 pour délimiter les unités acoustiques 43A.

En référence à la figure 7, la grille prend avantageusement appuie sur une partie non percée de la paroi 40 du volet 4.

Chaque unité acoustique 43A est alors délimitée par des cloisons latérales pleines 43A1 et par une paroi de fond 43A2 percée correspondant à une partie de la paroi 40 du volet 4.

Plus particulièrement, la structure 43 du volet 4 remplit une première fonction consistant à rigidifier le volet 4 lorsque celui-ci est dans la position de jet inversé de l'inverseur de poussée 1. Par ailleurs, la structure 43 du volet 4 remplit une deuxième fonction consistant à assurer une fonction acoustique du volet 4 lorsque celui-ci est dans la position de jet direct de l'inverseur de poussée.

Ainsi, en position de jet inversé, l'unique paroi 40 du volet 4 dévie le flux d'air traversant la veine de circulation d'air. Une partie du flux d'air entrant dans la veine de circulation d'air traverse la paroi 40 du volet via sa surface percée. On comprendra aisément que la surface percée de la paroi 40 du volet 4 permet de diminuer le différentiel de pression entre la section amont et le section aval de la veine de circulation d'air délimitée par le volet 4 en position de jet inversé.

Dans la position de jet inversé, la structure 43 du volet 4 est située du côté de la section aval de la veine de circulation d'air ainsi délimitée par le volet 4.

En position de jet direct, tel qu'illustré aux figures 3 à 5, l'unique paroi 40 du volet 4 est maintenue par la bielle 5 pour s'étendre le long de la structure mobile 3 de l'inverseur de poussée 1.

Plus particulièrement, l'unique paroi 40 du volet 4 est maintenue pour s'étendre le long d'une section acoustique 31 de la structure mobile 3.

La section acoustique 31 de la structure mobile 3 est ici formée par le carter interne 30 de la structure mobile 3 délimitant radialement la veine de circulation d'air.

Ainsi, la structure 43 raidissant le volet 4 fait face à la section acoustique 31 de la structure mobile 3.

La section acoustique 31 est avantageusement pleine de sorte à compenser l'absence d'une deuxième paroi pleine du volet 4.

De cette façon, dans la position de jet direct, la paroi 40 du volet 4, plus particulièrement la structure 43 de la paroi 40 du volet 4, forme avec la section acoustique 31 de la structure mobile 3 un résonateur acoustique limitant les risques de recirculation d'air entre le volet 4 et la section acoustique 31 de la structure mobile 3.

La section acoustique 31 de la structure mobile 3 remplace alors une paroi pleine du volet 4.

Le volet 4 se trouve alors allégé en poids et son encombrement dans l'inverseur de poussée 1 se trouve diminué. La bielle 5 peut alors elle aussi être réduite en dimension.

Tel que représenté à la figure 4, la structure 43 de la paroi 40 du volet 4 est dimensionnée pour, en position de jet direct, maintenir entre cette dernière 43 et ladite section acoustique 31 de la structure mobile 3 un jeu prédéterminé 7.

Plus particulièrement, le jeu prédéterminé 7 est formé entre, d'une part, les extrémités de la structure 43 du volet 4 s'étendant depuis sa paroi percée 40 et, d'autre part, la section acoustique 31 de la structure mobile 3, ceci en position de jet direct du volet 4.

Ce jeu prédéterminé 7 est avantageusement prévu pour permettre de réaliser la fonction acoustique de volet 4 dans la position de jet direct. Ce jeu est avantageusement inférieur à 3 millimètres.

Pour faciliter le maintien de ce jeu prédéterminé 7 entre la structure 43 du volet 4 et la section acoustique 31 de la structure mobile 3, il est prévu que l'inverseur de poussée 1 soit équipé d'un ressort 8 maintenant ce jeu prédéterminé 7.

Dans la position de jet direct, le ressort 8 empêche alors la paroi 40 du volet 4 de venir en contact de la section acoustique 31 de la structure mobile 3 est assure plus particulièrement le jeu prédéterminé 7.

Tel que représenté plus en détail à la figure 6, le ressort 8 est prévu pour être reçu dans une section de la structure 43 du volet 4, avantageusement distinctement des unités alvéolaires 43A. Le ressort 8 est alors fixé, par une série de vis, depuis la structure 43 du volet 4 pour émerger de celle-ci et empêcher le contact de la paroi 40 du volet 4 avec la section acoustique 31 de la structure mobile 3.

Plus particulièrement, le ressort 8 est formé de lames recourbées et précontraintes pour assurer le jeu prédétermine 7. Les extrémités de ses lames font saillies de la structure 43 du volet 3 pour assurer ce jeu prédétermine 7.

Le ressort 8 du volet 4 est avantageusement configuré pour permettre l'accrochage de la bielle 5.

Le ressort forme alors le point d'accrochage 41 du volet 4. Une partie de la structure 43 du volet 4 est avantageusement prévue pour recevoir les points pivot 42 du volet 4.

Tel que représenté à la figure 7, la paroi 40 du volet présente une ouverture 44 prévue pour le passage de la bielle 5, en vue de son accrochage avec le ressort 8 monté du côté de la structure 43 du volet 4.

Le ressort 8 a ainsi avantageusement pour fonction, d'une part, d'assurer le maintien du jeu prédéterminé 7 et, d'autre part, de permettre l'accrochage du mécanisme de déploiement du volet 4.

Par ailleurs, le ressort 8 est avantageusement au moins en partie confondu avec la structure 43 du volet 4 pour limiter l'encombrement du volet 4 dans la veine de circulation d'air.

En référence à la figure 5, on a illustré une vue détaillée d'un bord plat 45 de la paroi 40 du volet 4. Le bord plat 45 correspond particulièrement à celui en regard de la structure fixe 2 lorsque l'inverseur de poussée 1 est en position de jet direct.

Contrairement au mode de réalisation illustré aux figures 6 et 7, au moins le bord plat 45 du volet 4, ci-dessus décrit, est formé d'une surface plane prolongeant la paroi 40 linéairement, plus particulièrement dans la continuité de la surface percée de la paroi 40 du volet 4.

Tel qu'illustré ce bord plat 45 en regard de la structure fixe, en position de jet direct, comprend un joint à lèvre 9 limitant le passage d'air entre ce bord plat 45 du volet 4 et la structure fixe 2. En position de jet direct, ce joint à lèvre 9 vient s'appuyer contre la structure fixe 2.

La surface plane de ce bord plat 45 du volet permet le surmoulage de ce joint à lèvre 9 directement sur celui-ci.

Bien évidemment, l'invention n'est pas limitée aux exemples qui viennent d'être décrits et de nombreux aménagements peuvent être apportés à ces exemples sans sortir du cadre de l'invention.

## Revendications

1. Inverseur de poussée (1) d'une nacelle de turboréacteur pour aéronef, ledit inverseur de poussée (1) comportant une structure fixe (2) et une structure mobile (3) délimitant ensemble une veine de circulation d'air, au moins un volet (4) d'inversion de poussée comprenant une unique paroi (40), cette paroi (40) étant percée sur sa surface pour permettre le passage par le volet (4) d'une partie d'un flux d'air dévié par le volet (4), ladite paroi (40) comprenant une structure (43) raidissant le volet (4) et ayant une fonction acoustique, le volet (4) étant articulé entre la structure fixe (2) et la structure mobile (3) pour permettre :
- dans une position de jet direct, de disposer ladite paroi (40) du volet (4) le long d'une section acoustique (31) de la structure mobile (3) de sorte à permettre la circulation d'un flux d'air à travers la veine de circulation d'air, ladite section acoustique (31) formant avec la structure (43) de ladite paroi (40) un résonateur acoustique et,
- dans une position de jet inversé, de disposer ladite paroi (40) du volet (4) pour dévier un flux d'air traversant la veine de circulation d'air et permettre le passage, par la paroi (40) du volet (4) et à travers la veine de circulation d'air, d'une partie du flux d'air dévié par le volet (4).

2. Inverseur de poussée (1) selon la revendication précédente, **caractérisé en ce que** la structure (43) de la paroi (40) du volet (4) est dimensionnée pour, en position de jet direct, maintenir entre cette dernière et ladite section acoustique (31) de la structure mobile (3) un jeu prédéterminé (7), préférentiellement inférieur à 3 millimètres.

3. Inverseur de poussée (1) selon la revendication précédente, **caractérisé en ce qu'**il est équipé d'un ressort (8) maintenant ledit jeu prédéterminé (7) entre la structure (43) du volet (4) et ladite section acoustique (31) de la structure mobile (3).

4. Inverseur de poussée (1) selon la revendication précédente, **caractérisé en ce qu'**une partie de la structure (43) du volet (4) est prévue pour recevoir le ressort (8).

5. Inverseur de poussée (1) selon l'une des revendications 3 ou 4, **caractérisé en ce que** la paroi (40) du volet (4) présente une ouverture (44) prévue pour le passage d'un mécanisme de déploiement (5) du volet (4), préférentiellement une bielle, en vue de son accrochage au ressort (8).

6. Inverseur de poussée (1) selon l'une quelconque des revendications précédentes, **caractérisé en ce qu'**un bord (45) de ladite paroi (40) du volet (4) en regard de la structure fixe (2) en position de jet inversé comprend un joint à lèvre (9).

7. Inverseur de poussée (1) selon la revendication précédente, **caractérisé en ce que** le joint à lèvre (9) est surmoulé sur le bord (45) de ladite paroi (40).

8. Inverseur de poussée (1) selon l'une quelconque des revendications précédentes, **caractérisé en ce que** ladite paroi (40) est réalisée en aluminium ou en matière thermoplastique, ou encore en fibres composites.

9. Inverseur de poussée (1) selon l'une quelconque des revendications précédentes, **caractérisé en ce que** la structure (43) de la paroi (40) du volet (4) est formée d'une pluralité d'unités acoustiques (43A).

10. Nacelle de turboréacteur pour aéronef comprenant un inverseur de poussée (1) selon l'une quelconque des revendications précédentes.

## Patentansprüche

1. Schubumkehrvorrichtung (1) einer Turbostrahltriebwerksgondel für ein Flugzeug, wobei die Schubumkehrvorrichtung (1) eine feste Struktur (2) und eine bewegliche Struktur (3), die gemeinsam einen Luftzirkulationspfad begrenzen, und mindestens eine Schubumkehrklappe (4) umfasst, die eine einzelne Wand (40) umfasst, wobei die Wand (40) auf ihrer Oberfläche durchbohrt ist, um den Durchgang eines Teils eines Luftstroms, der von der Klappe (4) umgeleitet wird, durch die Klappe (4) zu ermöglichen, wobei die Wand (40) eine Struktur (43) umfasst, die die Klappe (4) versteift und eine akustische Funktion aufweist, wobei die Klappe (4) zwischen der festen Struktur (2) und der beweglichen Struktur (3) angelenkt ist, um Folgendes zu ermöglichen:
- in einer direkten Strahlposition, das Anordnen der Wand (40) der Klappe (4) entlang eines akustischen Abschnitts (31) der beweglichen Struktur (3), um die Zirkulation eines Luftstroms durch den Luftzirkulationspfad hindurch zu ermöglichen, wobei der akustische Abschnitt (31) mit der Struktur (43) der Wand (40) einen akustischen Resonator bildet und,
- in einer umgekehrten Strahlposition, das Anordnen der Wand (40) der Klappe (4), um einen Luftstrom umzuleiten, der sich durch den Luftzirkulationspfad bewegt, und um den Durchgang eines Teils des durch die Klappe (4) umgeleiteten Luftstroms durch die Wand (40) der Klappe (4) und durch den Luftzirkulationspfad hindurch zu ermöglichen.

2. Schubumkehrvorrichtung (1) nach dem vorhergehenden Anspruch,
**dadurch gekennzeichnet, dass** die Struktur (43) der Wand (40) der Klappe (4) in der direkten Strahlposition so dimensioniert ist, dass zwischen letzterer und dem akustischen Abschnitt (31) der beweglichen Struktur (3) ein vorbestimmter Abstand (7), vorzugsweise von weniger als 3 Millimeter, aufrechterhalten wird.

3. Schubumkehrvorrichtung (1) nach dem vorhergehenden Anspruch,
**dadurch gekennzeichnet, dass** sie mit einer Feder (8) ausgestattet ist, die den vorbestimmten Abstand (7) zwischen der Struktur (43) der Klappe (4) und dem akustischen Abschnitt (31) der beweglichen Struktur (3) aufrechterhält.

4. Schubumkehrvorrichtung (1) nach dem vorhergehenden Anspruch, **dadurch gekennzeichnet, dass** ein Teil der Struktur (43) der Klappe (4) dazu vorgesehen ist, die Feder (8) aufzunehmen.

5. Schubumkehrvorrichtung (1) nach einem der Ansprüche 3 oder 4, **dadurch gekennzeichnet, dass** die Wand (40) der Klappe (4) eine Öffnung (44) aufweist, die für den Durchgang eines Ausklappmechanismus (5) der Klappe (4), vorzugsweise eine Pleuelstange, bezüglich ihrer Befestigung an der Feder (8) vorgesehen ist.

6. Schubumkehrvorrichtung (1) nach einem der vorhergehenden Ansprüche, **dadurch gekennzeichnet, dass** ein Rand (45) der Wand (40) der Klappe (4), die in der Umkehrstrahlposition der festen Struktur (2) zugewandt ist, eine Lippendichtung (9) umfasst.

7. Schubumkehrvorrichtung (1) nach dem vorhergehenden Anspruch, **dadurch gekennzeichnet, dass** die Lippendichtung (9) auf den Rand (45) der Wand (40) aufgeformt ist.

8. Schubumkehrvorrichtung (1) nach einem der vorhergehenden Ansprüche, **dadurch gekennzeichnet, dass** die Wand (40) aus Aluminium oder einem thermoplastischen Material oder sogar Verbundfasern hergestellt ist.

9. Schubumkehrvorrichtung (1) nach einem der vorhergehenden Ansprüche, **dadurch gekennzeichnet, dass** die Struktur (43) der Wand (40) der Klappe (4) durch eine Vielzahl von akustischen Einheiten (43A) ausgebildet ist.

10. Turbostrahltriebwerksgondel für ein Flugzeug, die eine Schubumkehrvorrichtung (1) nach einem der vorhergehenden Ansprüche umfasst.

## Claims

1. A thrust reverser (1) of a turbojet engine nacelle for an aircraft, said thrust reverser (1) including a fixed structure (2) and a movable structure (3) together delimiting an airflow path, at least one thrust reverser flap (4) comprising a single wall (40), this wall (40) being pierced on its surface so as to allow the passage through the flap (4) of a portion of an air stream diverted by the flap (4), said wall (40) comprising a structure (43) stiffening the flap (4) and having an acoustic function, the flap (4) being articulated between the fixed structure (2) and the movable structure (3) to allow:
- in a direct jet position, arranging said wall (40) of the flap (4) along an acoustic section (31) of the movable structure (3) so as to allow the flow of an air stream through the air flow path, said acoustic section (31) forming with the structure (43) of said wall (40) an acoustic resonator and,
- in a reverse jet position, arranging said wall (40) of the flap (4) to divert an air stream passing through the air flow path and to allow the passage, through the wall (40) of the flap (4) and through the air flow path, of a portion of the air stream diverted by the flap (4).

2. The thrust reverser (1) according to the preceding claim, **characterized in that** the structure (43) of the wall (40) of the flap (4) is dimensioned, in the direct jet position, to maintain between the latter and said acoustic section (31) of the movable structure (3) a predetermined clearance (7), preferably less than 3 millimeters.

3. The thrust reverser (1) according to the preceding claim, **characterized in that** it is fitted with a spring (8) maintaining said predetermined clearance (7) between the structure (43) of the flap (4) and said acoustic section (31) of the movable structure (3).

4. The thrust reverser (1) according to the preceding claim, **characterized in that** a portion of the structure (43) of the flap (4) is configured to receive the spring (8).

5. The thrust reverser (1) according to any of claims 3 or 4, **characterized in that** the wall (40) of the flap (4) has an opening (44) provided for the passage of a mechanism (5) for deploying the flap (4), preferably a connecting rod, for attachment thereof to the spring (8).

6. The thrust reverser (1) according to any one of the preceding claims, **characterized in that** an edge (45) of said wall (40) of the flap (4) facing the fixed structure (2) in the reverse jet position comprises a lip seal (9).

7. The thrust reverser (1) according to the preceding claim, **characterized in that** the lip seal (9) is overmolded onto the edge (45) of said wall (40).

8. The thrust reverser (1) according to any one of the preceding claims, **characterized in that** said wall (40) is made of aluminum or a thermoplastic material, or even composite fibers.

9. The thrust reverser (1) according to any one of the preceding claims, **characterized in that** the structure (43) of the wall (40) of the flap (4) is formed by a plurality of acoustic units (43A).

10. A turbojet engine nacelle for an aircraft comprising a thrust reverser (1) according to any one of the preceding claims.
